(19) Europäisches Patentamt
European Patent Office
Office européen des brevets

(11) **EP 4 124 999 A1**

(12) **EUROPEAN PATENT APPLICATION**

(43) Date of publication:
**01.02.2023 Bulletin 2023/05**

(21) Application number: **21188520.7**

(22) Date of filing: **29.07.2021**

(51) International Patent Classification (IPC):
**G06N 3/04** *(2006.01)*     **G06N 3/08** *(2006.01)*
**G06N 7/00** *(2006.01)*

(52) Cooperative Patent Classification (CPC):
**G06N 3/0445; G06N 3/0454; G06N 3/088;
G06N 7/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Toyota-shi, Aichi-ken 471-8571 (JP)**
• **ETH Zurich - The Swiss Federal Institute of
Technology Zurich
8092 Zurich (CH)**

(72) Inventors:
• **ABBELOOS, Wim
1140 Brussels (BE)**
• **MELLO RELLA, Edoardo
8092 Zürich (CH)**
• **ZAECH, Jan-Nico
8092 Zürich (CH)**
• **LINIGER, Alexander
8092 Zürich (CH)**
• **VAN GOOL, Luc
8092 Zürich (CH)**

(74) Representative: **Cabinet Beau de Loménie
158, rue de l'Université
75340 Paris Cedex 07 (FR)**

(54) **METHOD AND SYSTEM FOR PREDICTING TRAJECTORIES OF AGENTS**

(57)     Method and system for predicting trajectories of agents

A computer-implemented recurrent neural network system (10) for predicting trajectories of agents present in a vicinity of a vehicle comprising traffic lanes, the system comprising:
- a first encoder module (MOD_ENC_1) configured to determine, for each agent and for a first time step, a vector ($h_{0,k}$) at least representative of a social interaction influence that the other agents have on said agent,
- a second encoder module (MOD_ENC_2) configured to determine a matrix ($M_L$) representative of similarities between the traffic lanes,
- a decoder module (MOD_DEC) comprising configure to determine, for each agent and for said first time step, at least a positional representation ($x_{1,k}$) of said agent.

**FIG. 5**

EP 4 124 999 A1

**Description**

Field of the disclosure

The present invention relates to the general field of computer data processing. It relates more specifically to a system for predicting trajectories of agents present in a vicinity of a vehicle comprising traffic lanes, and to a method for training said system. The invention further relates to a method for predicting trajectories of agents, said prediction method being carried out by the trained system.

Description of the Related Art

Predicting the future behaviour of agents present in a given environment and able to move in that environment is a challenging problem as agents adjust their behaviour depending on their intentions as well as on the others' actions.

The effective resolution of such a problem is currently becoming a major issue given the ever-increasing need for mobility. In particular, with the further development of autonomous driving, it is paramount to achieve systems able to drive accurately and safely, especially since traffic agents can be numerous and of any type like cars, trucks, cyclists, pedestrians, etc. Thus, one requirement for an autonomous vehicle is to understand the context and the dynamic behaviour of all the traffic agents while planning their paths.

Motion forecasting is a fundamental building block to achieve this: it consists of predicting the future trajectory of each surrounding traffic agent after observing a segment of its past motion.

Traditionally, motion forecasting has been implemented by relying on rules and constraints based on human knowledge of the driving tasks (see for example reference [1]). However, these methods suffer from being overly simple and not scalable.

More recent work has focused on learning-based neural network methods that have shown to outperform traditional ones.

In this way, one possible approach has been to represent the trajectories as a Birds-Eye-View rasterized image with different channels for different time steps (see reference [2]). Representations like this can encode map information inside the image as well and process everything together with a convolutional neural network (CNN) architecture. Yet, this suffers from quantization errors and the high computational cost associated with processing rendered images.

A different line of work has used recurrent neural networks (RNN) to build a representation for the trajectories. On top of the recurrent architecture, contextual information is added to model the interaction between agents and to extract the road structure (e.g. traffic lane network). For example, a model of interaction between agents can be designed using multi-head attention mechanism (see reference [3]).

Most recently, graph convolutional networks (GCN) have been used to unify interaction with other agents and with the environment into a single framework. More particularly, a GCN can be used to both embed high definition maps and trajectories as well as to model the relations between them (see reference [4]).

Although the latter methods tend to provide acceptable results, they are still limited in their ability to learn (and thus adapt to) complex interactions not only between agents, but also between agents and the environment.

Summary of the disclosure

The purpose of the present invention is to overcome all or some of the limitations of the prior art solutions, particularly those outlined here above, by providing a solution for predicting trajectories of agents present in a vicinity of a vehicle in a more efficient way than prior art solutions.

By "more efficiently", one refers here to a solution able to model and learn the principles that need to be followed in traffic, i.e. that can model how agents influence each other and how they interact, but that can also effectively use the information about the road structure and the traffic rules that apply to it, so that complex interactions can be taken into account.

That solution is also more efficient than prior art solutions in that it allows for multiple possible behaviours of each traffic agent (multimodal trajectory predictions), so that safety and accuracy can be improved.

To this end, and according to a first aspect, the invention relates to a computer-implemented recurrent neural network system for predicting trajectories of agents present in a vicinity of a vehicle comprising traffic lanes. Said system comprises:

- a first encoder module configured to determine, for each agent and before a first time step, a vector at least representative of a social interaction influence that the other agents have on said agent and being determined by using previous trajectories of the agents,
- a second encoder module configured to determine a representation of the traffic lanes,

- a decoder module comprising :

  • a first sub-module configured to determine, for each agent and for said first time step, a vector representative of the lanes which have a preponderant influence for the prediction of the trajectory of said agent, said vector being determined by using the vector determined by the first encoder module for said agent and the traffic lanes representation determined by the second encoder module,
  • a second sub-module corresponding to an artificial recurrent neural network configured to determine, for each agent and for said first time step, a vector representative of a state of said agent using the vector determined by the first sub-module for said agent and at least a positional representation of said agent at the beginning of the first time step,
  • a third sub-module configured to determine, for each agent and for said first time step, a vector representative of a social interaction influence that the other agents have on said agent using the vector determined by the second sub-module for said agent,
  • a fourth sub-module configured to determine, for each agent and for said first time step, at least a positional representation of said agent using the vector determined by the second sub-module for said agent.

Thus, the recurrent neural network system according to the invention comprises a recurrent behaviour encoder module (first encoder module), and a road structure encoder (second encoder module) which generates a map representation, so that their relevant parts can be merged with the agents' embeddings. The encoded road structure information is fused with further inter-agent interactions inside the decoder module.

To model uncertainty and multi-modality, Gaussian mixture models may be used. However, this does not exclude the possibility of other distributions or even a discrete representation of an agent's position.

The architecture of said recurrent neural network system enables to jointly model interactions between agents and with the representation of the traffic lanes. Furthermore, lane-to-lane attention is applied to add traffic lanes representation awareness to the lanes' embedding. Thanks to the use of social interaction influence and road structure contextual information inside the recurrent decoder module, an interactive influence on the agents is generated, which enables to learn more complex interactions.

Such architecture enables to reduce the complexity of the early stages of the network by including the relevant information inside the recurrent decoder. Otherwise said, the bulk of the model is moved to the decoder module so that, at each time steps, agents interact with each other and with the environment. This allows the network to always use up-to-date information, reducing the dependency on the encoder modules and taking correct short term decisions inside the decoder module.

According to particular embodiments, the recurrent neural network system may furthermore include one or more of the following features, taken alone or in any technically feasible combination.

According to particular embodiments, a plurality of consecutive time steps are considered, said system being further configured such that, for each agent and for each time step subsequent to a previous time step:

- the output of the second sub-module is provided as input to the first sub-module,
- the output of the fourth sub-module is provided as input to the second sub-module and the fourth sub-module,
- the output of the third sub-module is provided as input to the second sub-module.

According to particular embodiments:

- a positional representation of an agent is a Gaussian mixture representative of a position of said agent, the system further comprising a sampling module configured to determine, for each agent, a predicted trajectory by sampling said Gaussian mixture determined by the fourth sub-module for said agent, and/or
- a vector at least representative of a social interaction influence that the other agents have on said agent is determined by performing a multi head attention mechanism, and/or
- said representation of the traffic lanes is determined as a matrix by the second encoder module by performing a multi-head attention mechanism and using polylines modelling said traffic lanes, and/or
- said vector representative of the lanes which have a preponderant influence for the prediction of the trajectory of said agent is determined by the first sub-module by performing a single head attention mechanism, and/or
- said positional representation of said agent is determined by the fourth sub-module by also using the positional representation used as input to the second sub-module and a velocity vector of said agent obtained from the vector determined by the second sub-module.

According to particular embodiments, the second sub-module is a cell of Long-Short Term Memory type configured to perform calculations according to the following formulae:

$$a_\{t+1,k\} = \sigma(H\_1 \times h\_\{t-1,k,M\_L\} + S\_1 \times s\_\{t-1,k\} + k\_a)$$

$$b\_\{t+1,k\} = tanh(H\_2 \times h\_\{t,k,M\_L\} + S\_2 \times s\_\{t,k\} + k\_b)$$

$$d\_\{t+1,k\} = \sigma(H\_3 \times h\_\{t,k,M\_L\} + S\_3 \times s\_\{t,k\} + k\_d)$$

$$c\_\{t+1,k\} = c\_\{t,k\} * d\_\{t+1,k\} + a\_\{t+1,k\} * b\_\{t+1,k\}$$

$$f\_\{t+1,k\} = \sigma(H\_4 \times h\_\{t,k,M\_L\} + X\_1 \times x\_\{t,k\} + k\_f)$$

$$g\_\{t+1,k\} = tanh(H\_5 \times h\_\{t,k,M\_L\} + X\_2 \times x\_\{t,k\} + k\_g)$$

$$h\_\{t+1,k\} = tanh(c\_\{t+1,k\}) * f\_\{t+1,k\} + g\_\{t+1,k\}$$

where:

- t is a time index representative of the current time step,
- k is an index representative of the agent,
- * is a symbol indicating elementwise multiplications,
- M_L is a matrix representation of the traffic lanes determined by the second encoder module,
- h_{t-1,k,M_L} is the vector determined by the first sub-module,
- s_{t-1,k} is the social interaction influence vector provided as input to the second sub-module,
- σ is an activation function,
- x_{t-1,k} is the positional representation given as input to the second sub-module,
- H_1, H_2, H_3, H_4, H_5, S_1, S_2, S_3, X_1 and X_2 are constant matrices,
- k_a, k_b, k_d, k_f, k_g are constant vectors.

Such a recurrent cell fuses enables to fuse position and social information in the decoder. More particularly, the purpose of said recurrent cell is that the cell state should encode the high level behaviour of each agent, while the output needs to know the current position to update it. Thus, the cell state is updated only using the agent's embedding and the social interaction information, while the current position modifies the output used to regress the new prediction.

According to particular embodiments:

- a previous trajectory of an agent consists of a set of previous positions of the agent, or
- a previous trajectory of an agent comprises a set of previous positions of said agent as well as a set of previous velocities of said agent and/or a set of previous accelerations of said agent.

According to particular embodiments, the vector obtained at the output of the second sub-module is determined using a Gaussian mixture representative of a velocity of said agent at the beginning of the current time step.

According to a second aspect, the invention also relates to a computer-implemented method for training a recurrent neural network system according to the invention.

In particular embodiments, the training method may furthermore include one or more of the following features, taken alone or in any technically feasible combination.

According to particular embodiments, the training set comprises agent trajectories, each agent trajectory comprising a set of previous positions of said agent, said method comprising a preliminary step of applying random transformations to at least part of the sets of previous positions respectively associated with the agents, said random transformations comprising a combination of rotations and/or a combination of translations.

A significant challenge in motion forecasting is properly training the designed network since it has to be invariant to the position and rotation of the agents in the scene, produce diverse modalities, and combine the agents' trajectories with the road structure information and inter-agent interactions. To achieve the aforementioned invariance, said random transformations, such as a combination of rotations and translations, are advantageously applied to the training set.

According to particular embodiments, the training is implemented according to a "soft winner takes all" principle.

According to particular embodiments, the training method comprises:

- a first training phase consisting in training the whole system,
- a second training phase consisting in training only the first encoder module and the decoder module,
- a third training phase consisting in training only the second encoder module and the decoder module,

said first, second and third phases being performed simultaneously.

According to a third aspect, the invention also relates to a computer-implemented method for predicting trajectories of agents present in a vicinity of a vehicle comprising traffic lanes. Said prediction method is carried out by a recurrent neural network system trained by a training method according to the invention.

According to a fourth aspect, the invention also relates to a computer program including instructions for executing a training method according to the invention or a prediction method according to the invention when said program is executed by a computer.

This program can use any programming language and take the form of source code, object code or a code intermediate between source code and object code, such as a partially compiled form, or any other desirable form.

According to a fifth aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a sixth aspect, the invention also relates to a vehicle equipped with a system trained by a training method according to the invention.

Brief description of the drawings

How the present disclosure may be put into effect will now be described by way of example with reference to the appended drawings, in which:

- Figure 1 illustrates a particular embodiment of a recurrent neural network system according to the invention, said system being configured to predict trajectories of traffic agents present in a vicinity of a vehicle,
- Figure 2 illustrates an example of the hardware architecture of the recurrent neural network system of Figure 1,
- Figure 3 is a detailed representation of a first encoder module belonging to the system of Figure 1,
- Figure 4 is a detailed representation of a second encoder module belonging to the system 10 of Figure 1,
- Figure 5 is a detailed representation of a decoder module belonging to the system 10 of Figure 1,
- Figure 6 is a schematic representation of the architecture of a sub-module included in the decoder module of Figure 5,
- Figure 7 is a detailed representation of another sub-module included in the decoder module of Figure 5,
- Figure 8 illustrates a particular embodiment of the system of Figure 1 when it is configured to predict trajectories of traffic agent over a plurality of time steps,
- Figure 9 is a flowchart of the main steps of a prediction method according to the invention, these steps being carried out by the system of Figure 1 once it has been trained,
- Figure 10 is a table showing performance results of the prediction method according to the invention.

Description of the embodiments

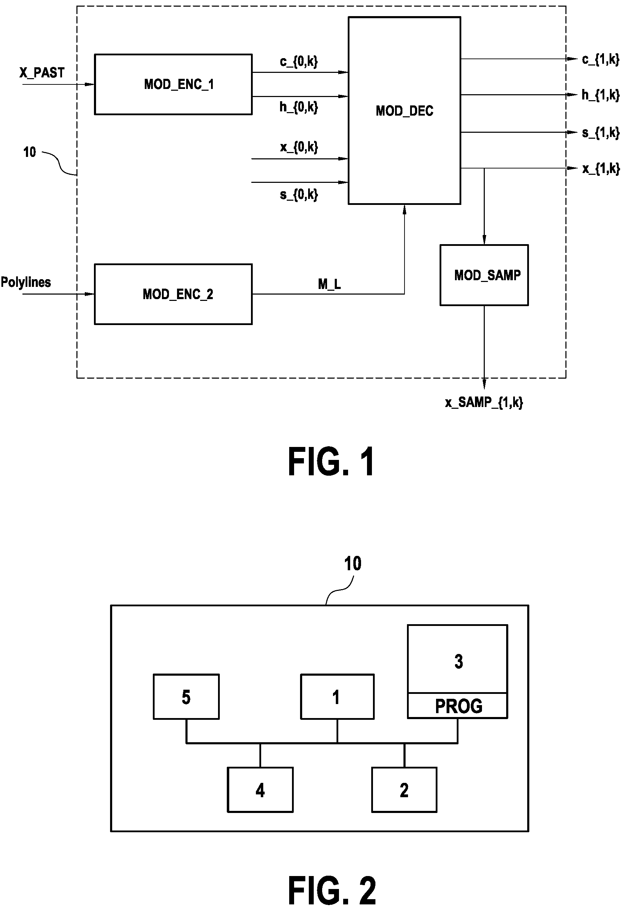

Figure 1 illustrates a particular embodiment of a recurrent neural network system 10 according to the invention. Said system 10 is configured to predict trajectories of traffic agents present in a vicinity of a vehicle, by implementing a prediction method according to the invention.

It is noted that the system 10 in Figure 1 is not yet trained at this stage, and therefore not yet integrated within said vehicle. However, it is understood that once trained, the system 10 is intended to be fitted to the vehicle, so as to perform said prediction method. The training aspects of the system 10 are described in more detail later.

According to the present embodiment, said vehicle is a car configured for autonomous or semi-autonomous driving. However, it is important to note that no limitation is attached to the type of vehicle that may be considered for the invention, e.g. truck, bus, or even bicycle, as long as it is intended to operate in an environment comprising traffic lanes on which other agents (not necessarily of the same type as it, given that they may even be pedestrians) may be seen (i.e. enter the field of vision as the vehicle moves).

Furthermore, the number of agents that can be considered in the vicinity of the vehicle is not a limiting factor of the invention. However, it is understood that the higher this number is, the higher the computational load and the complexity of managing potential interactions between the agents. Thus, the inventors found that considering, in no way limiting, a maximum number of twelve agents in the vicinity of the vehicle made it possible to provide a good compromise between trajectory prediction accuracy, reasonable computational load and taking into account an advanced degree of complexity for potential interactions between agents.

As mentioned above, the vicinity of the vehicle includes traffic lanes. By way of example, the vicinity of the vehicle corresponds to a square with a side length of 200 metres, the centre of which is occupied by the vehicle. However, considering such a square for the vicinity of the vehicle is only one variant of the implementation of the invention, and nothing precludes considering other examples, both in terms of shape (e.g. circle) and size.

The traffic lanes form the road network on which the vehicle is in motion. In a conventional way, in order to be able to carry out computer processing taking into account the topology of the road network, the traffic lanes are modelled using polylines.

Figure 2 illustrates an example of the hardware architecture of the recurrent neural network system 10 for the implementation of the prediction method according to the invention.

To this end, the system 10 has the hardware architecture of a computer. As shown in Figure 2, the system 10 comprises, in particular, a processor 1, a random access memory 2, a read-only memory 3, a non-volatile memory 4 and communication means 5.

The read-only memory 3 of the system 10 constitutes a recording medium conforming to the invention, which is readable by processor 1 and on which is recorded a computer program PROG conforming to the invention, containing instructions for carrying out the steps of the prediction method according to the invention. The program PROG defines functional modules of the system 10, which are based on or control the aforementioned elements 1 to 5 of the system 10, and which comprise in particular a first encoder module MOD_ENC_1, a second encoder module MOD_ENC_2, a decoder module MOD_DEC and a sampling module MOD_SAMP.

Said decoder module MOD_DEC comprises sub-modules which are also defined by the instructions of program PROG, namely a first sub-module SUB_MOD_1, a second sub-module SUB_MOD_2, a third sub-module SUB_MOD_3 and fourth sub-module SUB_MOD_4, as well as a fully connected layer FC_LAYER.

The functionalities attached to each of the modules/sub-modules/fully connected layer are explained in detail hereafter.

Nevertheless, it can already be noted that the first encoder module MOD_ENC_1 uses as input past trajectories respectively associated with agents located in the vicinity of the vehicle.

In the present embodiment, it is considered in a non-limiting way that a past trajectory of an agent consists of (i.e. is limited to) previous positions of said agent. Furthermore, it is also considered that the vehicle is equipped with means known per se configured to acquire such agent positions (for example, it may be tracking means). These previous positions are, for example, acquired during a determined period of time, for example 5 seconds, when the prediction method has not yet been implemented and the vehicle starts to move, and are then stored in a memory of the system 10, for example in the read-only memory 3. Therefore, at least part of the communication means 5 are configured to give processor 1 access to said previous positions in order to perform steps of the prediction method. For example, the communication means 5 may include a computer bus connecting processor 1 to the read-only memory 3.

The second encoder module MOD_ENC_2 uses as input the polylines defining the structure of the road in the vicinity of the vehicle.

These polylines are for example stored in a database server, i.e. externally to the system 10. Hence, at least part of the communication means 5 corresponds to hardware and/or software means configured to enable the system 10 to communicate with the database server, so as to receive said polylines. In practice, such an exchange of data between the system 10 and the database server is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

According to another example, the polylines defining the structure of the road in the vicinity of the vehicle are stored in a memory of the system 10, such as the non-volatile memory 4, prior to the execution of the prediction method. In such a case, at least part of the communication means 5 corresponds to hardware and/or software means configured to give processor 1 access to said polylines in order to perform steps of the prediction method. For example, the communication means 5 may include a computer bus connecting processor 1 to the non-volatile memory 4.

The configuration and operation of the modules/sub-modules/fully connected layer belonging to the system 10 will now be described in more detail. More precisely, and for reasons of simplification of the description, the data processing carried out by the modules are described with respect to a first time step. By "first time step", one refers to the first prediction that can be obtained by means of the system 10. Of course, it is possible to contemplate different successive time steps in the course of time, for example with a constant frequency (e.g. 10 Hz), this aspect being explained later when describing particular embodiments of the invention.

Furthermore, one adopts the notation according to which the previous trajectories of the agents present in the vicinity of the vehicle at the time when said first time step is implemented are represented by a vector X_PAST. Each component X_PAST_k of the vector X_PAST, k being an integer index between 1 and K, corresponds to a vector comprising the previous positions of an agent A_k. It is thus understood that, in accordance with this choice of notation, there are K agents A_1, ..., A_K in the vicinity of the vehicle.

To achieve accurate predictions in motion forecasting, it is essential to jointly exploit the information provided about the past trajectory of each agent A_k and the surrounding environment. Therefore, it is necessary to design a network architecture able to embed each of these inputs and to combine them in an effective way.

The encoder modules MOD_ENC_1 and MOD_ENC_2 are both configured for this purpose. In particular, and as shown on Figure 1, the first encoder module MOD_ENC_1 is configured to determine, for each agent A_k and before the first time step, a vector $h_{0,k}$ at least representative of a social interaction influence that the other agents (i.e. A_j with j different from k) have on said agent A_k, said vector $h_{0,k}$ being determined by performing a multi-head attention mechanism and using the previous trajectories X_PAST of the agents.

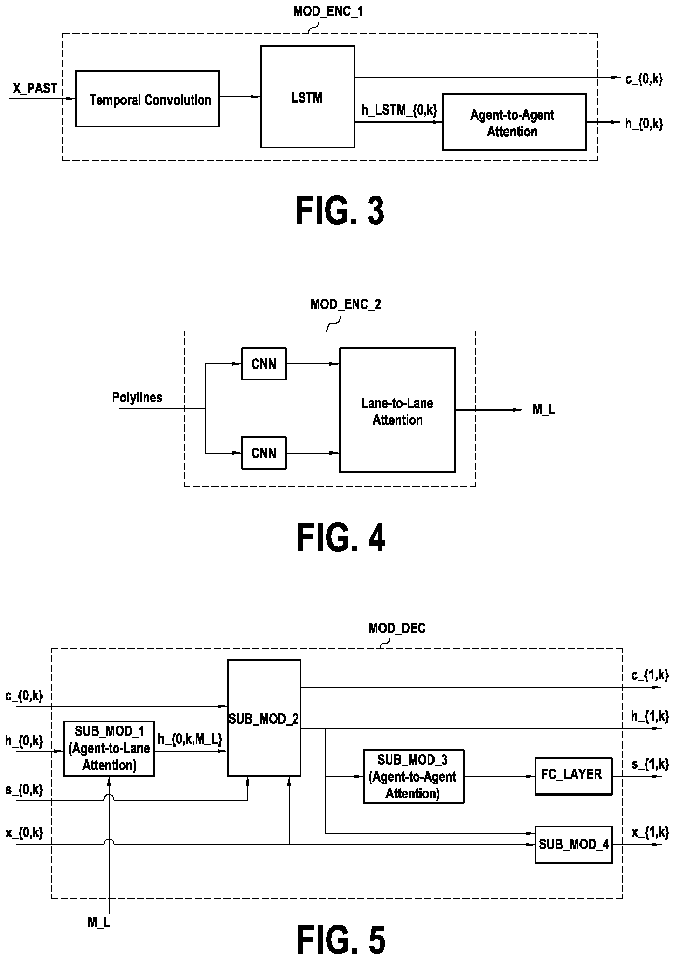

Figure 3 is a detailed representation of the first encoder module MOD_ENC_1 belonging to the system 10 of Figure 1.

The module MOD_ENC_1 is an encoder configured to provide a representation of the observed trajectories. As shown on Figure 3, the module MOD_ENC_1 uses a set of temporal convolutions implementing a one dimensional kernel, referred to as "Temporal Convolution" sub-module, and an LSTM cell (acronym for the expression "Long Short-Term Memory") to combine the outputs of the Temporal Convolution sub-module into a single vector $h\_LSTM_{0,k}$. Said vector $h\_LSTM_{0,k}$ represents, for each agent A_k, an embedding vector encoding its observed trajectory. The vector $h\_LSTM_{0,k}$ is then fed into an interaction layer, referred to as "Agent-to-Agent Attention" sub-module, to model the influence that agents have on each other, so as to finally obtain said vector $h_{0,k}$.

The Agent-to-Agent Attention sub-module model the interaction between agents with multi-head attention mechanism. The embedding vector $h\_LSTM_{0,k}$ is used to create a key K, query Q, and value vector V for each of the H attention heads involved in said multi-head attention mechanism.

As is known to the person skilled in the art, each attention head can recover interaction patterns, such as focusing on the traffic agent A_k in front, in the back, or in some other area. By way of a non-limiting example, the number H of attention heads is equal to 8 so as to cover a sufficient number of directions.

Inside each attention head, the level of interaction between the agents in the scene (i.e. in the vicinity of the vehicle when the first time step is carried out) is modelled with the dot product between the key K and query vector Q. This set of agent-specific scores is then used to weight the combination of the value vector V so as to obtain a matrix M_O according to the following formula:

$$M\_O = softmax\left(\frac{QK^T}{\sqrt{d_k}}\right) V$$

with $d_k$ the key dimension. Each head outputs a vector for each agent A_k that constitutes a representation of the social interaction influence on it. The results of all the attention heads for an agent A_k are linearly fused and summed to the original embedding $h\_LSTM_{0,k}$, and thereafter propagated, for example with a skip connection.

As is shown on Figure 3, yet another vector $c_{0,k}$ is provided at the output of the cell LSTM. This vector $c_{0,k}$ is classically representative of the state of said cell LSTM after the processing performed for the agent A_k.

For more details on the implementation of the multi-head attention mechanism, as well as on the concept of social interaction influence, references [3] and [6] can be consulted.

Although the determination of the vector $h_{0,k}$ has been described above considering that a multi head attention mechanism was performed, it is important to note that this is only one variant implementation of the invention. Thus, nothing excludes the possibility of considering other variants as long as, more generally, the first encoder MOD_ENC_1 is configured to implement any type of mapping from an input past trajectory to an output feature embedding (e.g. fully connected network).

As for the second encoder module MOD_ENC_2, it is configured to determine a matrix M_L representative of similarities between the traffic lanes. Said matrix M_L is determined by performing a multi-head attention mechanism and using the polylines modelling the traffic lanes located in the vicinity of the vehicle when at least said first time step is implemented (the number of rows of the matrix M_L is equal to the number of polylines taken into account during the first time step).

Figure 4 is a detailed representation of the second encoder module MOD_ENC_2 belonging to the system 10 of Figure 1.

As mentioned above, the road structure is represented with polylines, which are ordered sequences of points on the street centreline. If combined, multiple polylines can cover the whole road structure in a scene. As shown on Figure 4, such a combination is implemented using an interaction layer, referred to as "Lane-to-Lane Attention" sub-module, with multi-head attention mechanism.

The input to the Lane-to-Lane Attention sub-module is obtained using a set of convolutions ("CNN" on Figure 4) applied to the original polyline structure.

By way of an example, using two convolutional layers and a weighted averaging, the polylines are converted to 64-dimensional feature vectors. These representations are then fed into the Lane-to-Lane Attention sub-module to obtain an embedding for each polyline that combines information about itself and its neighbourhood. The similarity scores between them can be seen as the elements of an adjacency matrix, i.e. said matrix $M\_L$, representing a graph that has polylines as nodes.

Although the determination of the matrix $M\_L$ has been described above considering that a multi head attention mechanism was performed and using polylines, it is important to note that this is only one variant implementation of the invention. Thus, nothing excludes the possibility of considering other variants as long as, more generally, the second encoder MOD_ENC_1 is configured to determine a traffic lanes representation (it can be any function that maps some map representation (even different from polylines) to a set of feature vectors).

The various components of the MOD_DEC decoder module are now described. Figure 5 is a detailed representation of the decoder module MOD_DEC belonging to the system 10 of Figure 1.

The decoder module MOD_DEC uses both road structure and interaction between agents information (i.e. $M\_L$ and $h\_{0,k}$). This allows the system 10 to always use up-to-date information, reducing the dependency on the first and second encoder modules MOD_ENC_1, MOD_ENC_2 and taking correct short term decisions inside the decoder module MOD_DEC.

The inputs to the decoder module MOD_DEC for each agent $A\_k$, and for the first time step, are the vector $h\_{0,k}$, its current position (here denoted by $x\_{0,k}$). In the present embodiment, another input for said decoder module MOD_DEC for each agent $A\_k$ is a vector $s\_{0,k}$ that corresponds to a social interaction influence that the other agents have on said agent $A\_k$ before the first time step. By way of an example, said vector $s\_{0,k}$ may be initialized to zero.

For the first time step, the current position $x\_{0,k}$ is the last observation for agent $A\_k$. In the present embodiment, it corresponds to a Gaussian mixture representative of a position of said agent $A\_k$ at the beginning of the first time step. However, it should be noted that the current position of agent $A\_k$ may also correspond to the previous prediction, if successive time steps are envisaged as described below in the context of particular embodiments.

For the first time step, the social interaction influence $s\_{0,k}$ is set to 0. However, it should be noted that this social interaction influence may also correspond to the output of an inter-agent social attention module executed at each decoder step (here it is the fully connected layer FC_LAYER), if successive time steps are envisaged as described below in the context of particular embodiments.

The first sub-module SUB_MOD_1 is configured to determine, for each agent $A\_k$ and for said first time step, a vector $h\_{0,k,M\_L}$ representative of the lanes which have a preponderant influence for the prediction of the trajectory of said agent $A\_k$. Said vector $h\_{0,k,M\_L}$ is determined by performing a single-head attention mechanism and using the vector $h\_{0,k}$ determined by the first encoder module MOD_ENC_1 for said agent $A\_k$ and the matrix $M\_L$ determined by the second encoder module MOD_ENC_2.

Said first sub-module SUB_MOD_1 may be viewed as an "Agent-to-Lane Attention" sub-module that allows the computation of an agent-specific map representation (i.e. $h\_{0,k,M\_L}$), which focus primarily on the part of the road useful for prediction.

In more detail, and similar to what has been described before regarding the operation of the Agent-to-Agent Attention sub-module, a key vector for each agent $A\_k$ and query and value vectors for the lane embeddings (i.e. $M\_L$) are first computed. Then, the attention mechanism is applied to these vectors. In parallel, and by way of an example, a skip connection may be used so as to preserve the agent's embedding which is added to the map contribution.

According to a more specific embodiment of said first sub-module SUB_MOD_1, the influence of polylines is discounted with a direction-aware distance between the agent and the polylines. Such features are advantageous in stabilising the training process, which is described later. This is based on the assumption that regions of the road close to an agent $A\_k$ and with the same direction should have a higher influence on its behaviour than other areas.

Although the determination of the vector $h\_{0,k,M\_L}$ has been described above considering that a single head attention mechanism was performed, it is important to note that this is only one variant implementation of the invention. Thus, nothing excludes the possibility of considering other variants as long as, more generally, the first sub-module SUB_MOD_1 is configured to model interaction between agents and the map (road structure) inside the decoder module MOD_DEC.

The second sub-module SUB_MOD_2 corresponds to an artificial recurrent neural network of the LSTM type and is configured to determine, for each agent $A\_k$ and for said first time step, a vector $h\_{1,k}$ representative of a state of said agent $A\_k$, said vector $h\_{1,k}$ being determined using the vector $h\_{0,k,M\_L}$ determined by the first sub-module SUB_MOD_1 for said agent $A\_k$, the vector $s\_{0,k}$ and the Gaussian mixture $x\_{0,k}$. The vector $h\_{1,k}$ may be viewed as a new agent's embedding which has information on the future behaviour of the agent (as it is used to get the next prediction).

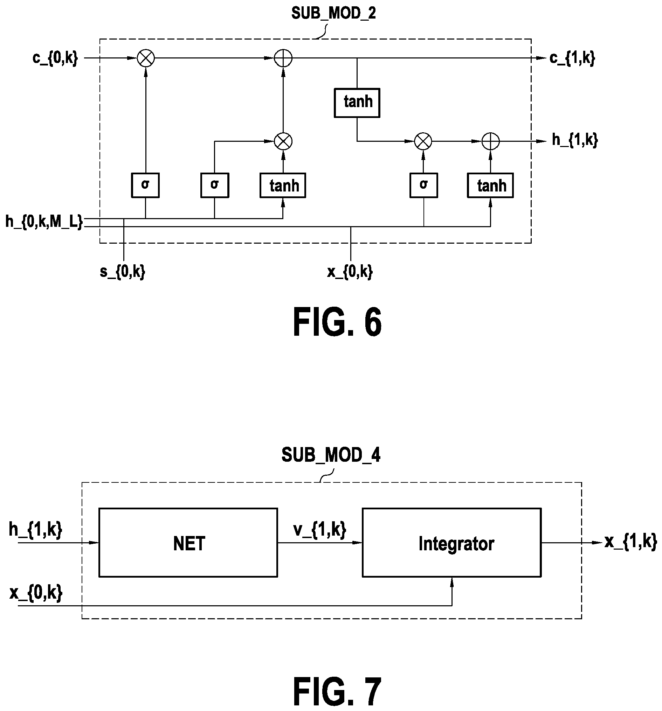

In the particular embodiment shown on Figure 5, and as represented on Figure 6 which is a schematic representation of the architecture of the second sub-module SUB_MOD_2, said second sub-module SUB_MOD_2 is a cell of LSTM type configured to perform calculations according to the following formulae:

$$a\_\{1,k\} = \sigma(H\_1 \times h\_\{0,k,M\_L\} + S\_1 \times s\_\{0,k\} + k\_a)$$

$$b\_\{1,k\} = tanh(H\_2 \times h\_\{0,k,M\_L\} + S\_2 \times s\_\{0,k\} + k\_b)$$

$$d\_\{1,k\} = \sigma(H\_3 \times h\_\{0,k,M\_L\} + S\_3 \times s\_\{0,k\} + k\_d)$$

$$c\_\{1,k\} = c\_\{0,k\} * d\_\{1,k\} + a\_\{1,k\} * b\_\{1,k\}$$

$$f\_\{1,k\} = \sigma(H\_4 \times h\_\{0,k,M\_L\} + X\_1 \times x\_\{0,k\} + k\_f)$$

$$g\_\{1,k\} = tanh(H\_5 \times h\_\{0,k,M\_L\} + X\_2 \times x\_\{0,k\} + k\_g)$$

$$h\_\{1,k\} = tanh(c\_\{1,k\}) * f\_\{1,k\} + g\_\{1,k\}$$

where:

- * is a symbol indicating elementwise multiplications,
- $\sigma$ is an activation function,
- H_1, H_2, H_3, H_4, H_5, S_1, S_2, S_3, X_1 and X_2 are constant matrices,
- k_a, k_b, k_d, k_f, k_g are constant vectors.

According to these formulae, the cell state $c\_\{1,k\}$ allows to encode the high level behaviour of each agent A_k, while the output needs to know the current position to update it. Thus, the cell state $c\_\{1,k\}$ is updated only using the agent's embedding $h\_\{0,k,M\_L\}$ and the social interaction influence information $s\_\{0,k\}$, while the current position $x\_\{0,k\}$ modifies the output $h\_\{1,k\}$ used to regress the new prediction.

It should be noted that the equations described above, with respect to the second sub-module SUB_MOD_2, represent only one alternative for the implementation of the invention. In particular, nothing excludes the possibility of considering other alternatives, such as, for example, a second sub-module MOD_SUB_2 configured as a traditional LSTM cell based on formulae known to the skilled person (typically, it concerns the equations allowing the calculation of $a\_\{1,k\}$, $b\_\{1,k\}$, $d\_\{1,k\}$ and $c\_\{1,k\}$ only).

Moreover, although the determination of the vector $h\_\{1,k\}$ has been described above considering the use of a Gaussian mixture $x\_\{0,k\}$ for the position of agent A_k, it is important to note that this is only one variant implementation of the invention. In general, no limitation is attached to the positional representation of an agent A_k, which may for example correspond to a non-Gaussian distribution or to a discrete position.

The third sub-module SUB_MOD_3 is configured to determine, for each agent A_k and for said first time step, a vector $s\_\{1,k\}$ at least representative of a social interaction influence that the other agents have on said agent A_k. Said vector $s\_\{1,k\}$ is determined by performing a multi-head attention mechanism and using the vector $h\_\{1,k\}$ determined by the second sub-module SUB_MOD_2 for said agent A_k.

In practice, said third sub-module SUB_MOD_3 is identical to the Agent-to-Agent Attention sub-module described above regarding the implementation of the first encoder module MOD_ENC_1. It should be noted that the third sub-module SUB_MOD_3 knows all the vectors $h\_\{1,1\}$,..., $h\_\{1,K\}$ in the vicinity of the vehicle during the first time step and performs a dot-product between the hidden states of all the agents (i.e. between feature representations of the agent's states) in a similar manner as described above for the first encoder module MOD_ENC_1.

The fully connected layer FC_LAYE is here connected to the output of the third sub-module SUB_MOD_3, to conventionally modify the dimensionality of the vector determined by said third sub-module SUB_MOD_3. In any case, it will be clear to the person skilled in the art that the use of such FC LAYER is optional.

The fourth sub-module SUB_MOD_4 is configured to determine, for each agent A_k and for said first time step, a Gaussian mixture x_{1,k} representative of a position of said agent A_k. Said Gaussian mixture x_{1,k} is determined using the vector h_{1,k} determined by the second sub-module SUB_MOD_2 for said agent, said Gaussian mixture x_{0,k} and a velocity vector v_{1,k} of said agent A_k obtained from the vector h_{1,k}.

Figure 7 is a detailed representation of the fourth sub-module SUB_MOD_4 belonging to the decoder module MOD_DEC of Figure 5.

As shown on Figure 7, the fourth sub-module SUB_MOD_4 comprises a fully connected neural network (e.g. with 3 layers), referred to as "NET" on Figure 7 and configured to determine said vector v_{1,k} from the vector h_{1,k}. The fourth sub-module SUB_MOD_4 also comprises means, referred to as "Integrator" on Figure 7 and configured to determine the Gaussian mixture x_{1,k} from the Gaussian mixture x_{0,k} and the vector v_{1,k}. More particularly, said Integrator performs data processing by assuming, for example, that the velocity of an agent is constant during the first time step.

Although the determination of the Gaussian mixture x_{1,k} has been described above considering the use of the Gaussian mixture x_{0,k} and the velocity vector v_{1,k}, it will be clear to the person skilled in the art that such a way of proceeding is in no way limiting the invention.

Furthermore, what was described above regarding the possibility of using a positional representation for an agent that is different from a Gaussian mixture is of course still applicable here.

Finally, the sampling module MOD_SAMP is configured to determine, for each agent A_k, a predicted trajectory x_SAMP_{1,k} by sampling said Gaussian mixture x_{1,k} determined by the fourth sub-module SUB_MOD_4 for said agent A_k.

It should be noted that the presence of the sampling module MOD_SAMP is only optional for the purpose of the invention. It allows here to discretize the Gaussian mixture. It is nevertheless understood that if the position representation of an agent is determined in a discrete way, then it is not necessary to use such a sampling module MOD_SAMP. It can also be considered that the predicted trajectory for an agent consists of a distribution such as said Gaussian mixture, so that again no sampling needs to be performed.

The system 10 according to the invention has been described so far considering a first time step only. However, the invention also covers other embodiments in which a plurality of consecutive time steps is considered.

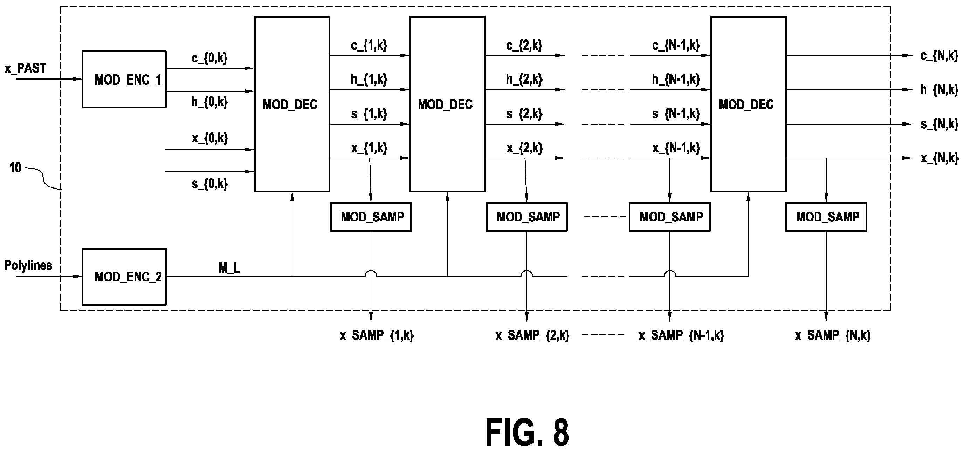

Figure 8 illustrates a particular embodiment of the system 10 in which a plurality of consecutive time steps is considered.

As can be seen in Figure 8, the same decoder module MOD_DEC is shown a plurality of times, more specifically N times, so as to symbolise said N time steps.

The notation is adopted where t is a time index representative of the current time step.

According to the embodiment of Figure 8, the system 10 is further configured such that, for each agent A_k and for each time step subsequent to a previous time step:

- the output h_{t+1,k} of the second sub-module SUB_MOD_2 is provided as input to the first sub-module SUB_MOD_1. Hence, the output h_{t+1,k} with index t equal to 0 (i.e. h_{1,k}) replaces the vector h_{0,k} determined by the first encoder MOD_ENC_1 module when the previous time step is said first time step,
- the output x_{t+1,k} of the fourth sub-module SUB_MOD_4 is provided as input to the second sub-module SUB_MOD_2 and the fourth sub-module SUB_MOD_4,
- the output s_{t+1,k} of the third sub-module SUB_MOD_3 is provided as input to the second sub-module SUB_MOD_2.

It should be noted that, in accordance with the notation of using the time index t, the formulae given above to describe the operation of the second sub-module SUB_MOD_2 are written as follows in the case of multiple consecutive time steps:

$$a_{\{t+1,k\}} = \sigma(H\_1 \times h\_\{t,k,M\_L\} + S\_1 \times s\_\{t,k\} + k\_a)$$

$$b_{\{t+1,k\}} = tanh(H\_2 \times h\_\{t,k,M\_L\} + S\_2 \times s\_\{t,k\} + k\_b)$$

$$d_{\{t+1,k\}} = \sigma(H\_3 \times h\_\{t,k,M\_L\} + S\_3 \times s\_\{t,k\} + k\_d)$$

$$c\_\{t + 1, k\} = c\_\{t,k\} * d\_\{t + 1, k\} + a\_\{t + 1, k\} * b\_\{t + 1, k\}$$

$$f\_\{t + 1, k\} = \sigma(H\_4 \times h\_\{t, k, M\_L\} + X\_1 \times x\_\{t, k\} + k\_f)$$

$$g\_\{t + 1, k\} = tanh(H\_5 \times h\_\{t, k, M\_L\} + X\_2 \times x\_\{t, k\} + k\_g)$$

$$h\_\{t + 1, k\} = tanh(c\_\{t + 1, k\}) * f\_\{t + 1, k\} + g\_\{t + 1, k\}$$

It should also be noted that it is possible to consider embodiments in which the M_L matrix is updated at each time step in order to take into account the evolution of the vehicle's environment in a very precise way. Alternatively, the M_L matrix may be updated only after a given number of time steps in order to minimize the computational overhead.

The system 10 according to the invention has also been described so far considering that a previous trajectory of an agent A_k consists of a set of previous positions of said agent A_k. However, the invention is not limited to such features, and nothing precludes considering other embodiments in which a previous trajectory of an agent A_k comprises a set of previous positions of said agent A_k as well as still other elements.

By way of an example, a previous trajectory of an agent A_k comprises a set of previous positions of said agent A_k as well as a set of previous velocities of said agent A_k and/or a set of previous accelerations of said agent A_k. The inventors have indeed found that taking into account previous velocities and/or previous accelerations advantageously improves the accuracy of the trajectory predicted by the system 10 for said agent A_k.

Taking into account velocity data is not limited to the previous trajectories of the agents. Thus, in addition to the previous example, or alternatively, the vector h_{t+1,k} obtained at the output of the second sub-module SUB_MOD_2 may also be determined using a Gaussian mixture representative of a velocity of the agent A_k at the beginning of the current time step.

Finally, it may also be noted that the invention also makes it possible to take into account, in addition to said previous trajectories and as an input to the system 10, the orientation of the agents present in the vicinity of the vehicle in order to predict the future trajectories of said agents.

As mentioned above, in addition to the fact that the invention relates to the system 10, the invention also relates to a method for predicting the trajectory of traffic agents present in a vicinity of a vehicle.

Said prediction method is carried out by the system 10 once it has been trained. Aspects related to the training of the system 10 are detailed later.

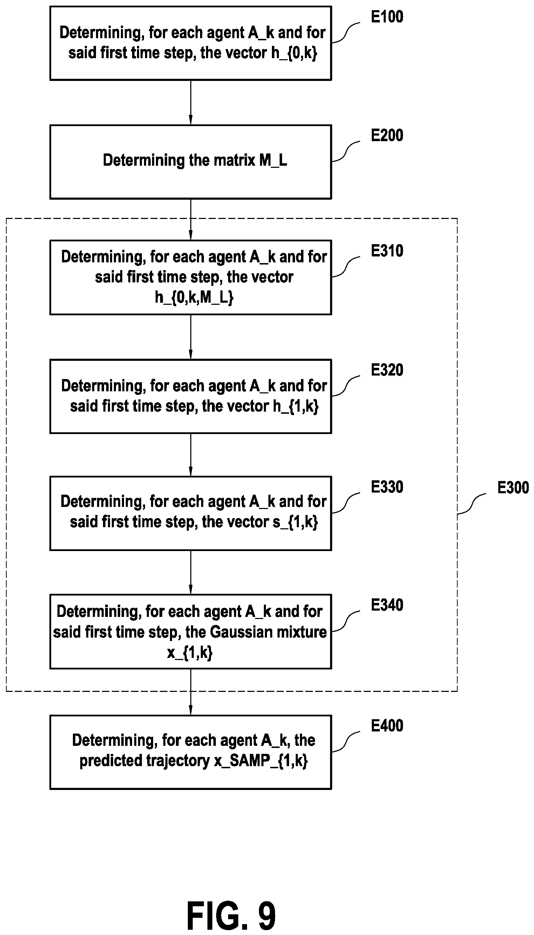

Figure 9 is a flowchart of the main steps of the prediction method according to the invention, these steps being carried out by the system 10 of Figure 1 once it has been trained.

It should be noted that the prediction method described with reference to Figure 9 only deals with the case of a first time step when no velocity data is taken into account for past trajectories and/or Gaussian mixtures.

However, it is of course understood that this description is generalizable to the case where:

- a plurality of consecutive time steps are considered, in accordance with the technical features also mentioned above (see Figure 8 for example), and/or
- a previous trajectory of an agent A_k comprises a set of previous positions of said agent A_k as well as a set of previous velocities of said agent A_k and/or a set of previous accelerations of said agent A_k, and/or
- the vector obtained at the output of the second sub-module SUB_MOD_2 is also determined using a Gaussian mixture representative of a velocity of an agent A_k at the beginning of the current time step.

As shown on Figure 9, the prediction method comprises a step E100 of determining, for each agent A_k and for said first time step, the vector h_{0,k}. This determination step E100 is performed by the first encoder module MOD_ENC_1 equipping the system 10.

The prediction method also comprises a step E200 of determining the matrix M_L. This determination step E200 is performed by the second encoder module MOD_ENC_2 equipping the system 10.

There is no limitation on the order in which said steps E100 and E200 are performed. In fact, there is nothing to prevent them from being performed in parallel.

The prediction method also comprises a step E300 of determining a plurality of quantities. This determination step E300 is performed by the decoder module MOD_DEC equipping the system 10.

More precisely, said step 3E00 comprises a sub-step E310 of determining, for each agent A_k and before said first time step, the vector h_{0,k,M_L}. This determination sub-step E310 is performed by the first sub-module SUB_MOD_1 of the decoder module MOD_DEC.

The step E300 also comprises a sub-step E320 of determining, for each agent A_k and for said first time step, the vector h_{1,k}. This determination sub-step E320 is performed by the second sub-module SUB_MOD_2 of the decoder module MOD_DEC.

The step 300 also comprises a sub-step E330 of determining, for each agent A_k and for said first time step, the vector s_{1,k}. This determination sub-step E330 is performed by the third sub-module SUB_MOD_3 of the decoder module MOD_DEC.

The step E300 also comprises a sub-step E340 of determining, for each agent A_k and for said first time step, the Gaussian mixture x_{1,k}. This determination sub-step E340 is performed by the fourth sub-module SUB_MOD_4 of the decoder module MOD_DEC.

The prediction method also comprises a step E400 of determining, for each agent A_k, the predicted trajectory x_SAMP_{1,k}. This determination step E400 is performed by the sampling module MOD_SAMP equipping the system 10.

The invention has been described so far in terms of said prediction method and the system 10 configured to implement it. However, the invention is not limited to these objects, and also covers a method for training said system 10 so that it can be used to predict agent trajectories after being integrated into a vehicle. Correspondingly, the invention also covers a system configured to implement this training method, referred to as "training system" hereafter.

In a similar way to what has been described for the prediction system 10, the training system has the hardware architecture of a computer. Said training system may comprise, in particular, a processor, a random access memory, a read-only memory, a non-volatile memory and communication means. The read-only memory of the training system constitutes a recording medium conforming to the invention, which is readable by said processor and on which is recorded a computer program conforming to the invention, containing instructions for carrying out the training method according to the invention

The rest of the description aims to detail embodiments of the training method according to the invention.

To describe these aspects, some notations are first introduced. More precisely, the previous positions of an agent A_k (as part of the previous trajectory of said agent A_k) may be defined as (P1;P2) coordinates in a scene coordinate system.

By way of an example, said coordinate system may be centred at the last observation of a specific anchor agent (the choice of the anchor agent is dataset specific for example). The original input sequence may also be smoothed with a bidirectional Kalman filter which may also be used to augment the agent's information with estimated velocity and acceleration and to interpolate the position sequences when information is missing. These gaps in a position sequence can occur due to occlusions during the dataset recording. Furthermore, to reduce the negative effect of unevenly sampled data, the time-step value may be used as an additional feature in the previous trajectory input to the prediction system 10.

As motion forecasting is generally accepted as a task with intrinsic uncertainty, it is preferable, but not necessary, to predict multiple trajectories with their relative probability. Hence, the different behaviours of the agents may be modelled using Gaussian mixture models (GMM), as already mentioned above for the description of embodiments of the system 10. Each of the modes in the GMM distribution is sampled to produce a sequence of discrete data that form trajectories.

In a conventional manner, a GMM distribution is defined as the sum of multiple Gaussian distributions, weighted by nonnegative mixing parameters $w_i$:

$$\sum_{i=0}^{I} w_i N(\mu_i, E_i) = 1$$

where I stands for the number of modes used in the Gaussian mixture and the nonnegative mixing parameters $w_i$ sum to one:

$$\sum_{i=0}^{I} w_i = 1$$

By assuming that P1 and P2 components are independent, a GMM distribution in the context of the present invention admits a diagonal covariance matrix E and a mean $\mu$ such that:

$$\mu = \begin{pmatrix} \mu_{P1} \\ \mu_{P2} \end{pmatrix} \quad and \quad E = \begin{pmatrix} e_{P1}^2 & 0 \\ 0 & e_{P2}^2 \end{pmatrix}$$

From now on, let's consider embodiments where an agent's previous trajectory is defined by position data as well as by velocity data. Hence, for each agent $A\_k$ and for the first time step, there are two types of GMM distributions:

- the velocities $v\_\{1,k\} = [v\_P1\_\{1,k\};v\_P2\_\{1,k\}]^T$ predicted by the system 10 (more precisely by the fourth sub-module SUB_MOD_4). The GMM distribution $v\_\{1,k\}$ is notably characterised by mean $\mu_v$, covariance $E_v$ and mixing parameters $w_v$,
- the positions $x\_\{1,k\} = [P1;P2]^T$ obtained by integrating these velocities $v\_\{1,k\}$. The GMM distribution $x\_\{1,k\}$ is notably characterised by mean $\mu_x$, covariance $E_x$ and mixing parameters $w_x$.

According to the invention, the training method is performed using a loss function L of the negative log-likelihood type. Otherwise said, the training method is based on the negative log-likelihood loss between the predicted position and velocity distributions and the actual position and velocity. Proceeding in this way allows the multi-modality of the prediction to be taken into account.

To define the negative log-likelihood (NLL) cost using the previously introduced notations, a target z may be introduced which consists both of position and velocity. To make the notation simpler, both GMM distributions (position and velocity) used by the detection system 10 may be combined into one single GMM distribution which is representative of the target z. The combination is carried out by concatenating said both GMM distributions such that one of said both GMM distribution appears first, e.g. the position GMM distribution. In this way, one obtains a new GMM distribution with mean $\mu_z$, covariance $E_z$ and weights $w_z$.

Hence, the NLL between the ground truth target, indicated here as $z_{GT}$, and each mode of said new GMM distribution, may be formulated as follows:

$$NLL(z_{GT}, \mu_z, E_z) = \frac{1}{2}\left[(z_{GT} - \mu_z)^T E_z^{-1}(z_{GT} - \mu_z)\right] + \ln\left(2\pi\sqrt{det E_z}\right)$$

Given the NLL for each mode of said new GMM distribution, the loss L of the training method may be computed by combining all the "I" modes in the following way:

$$L\left(z_{GT}, N_{z,i=1}^I\right) = -\ln\left(\sum_{i=0}^{I} w_i \times exp\left(-NLL\left(z_{GT}, \mu_{z,i}, E_{z,i}\right)\right)\right)$$

where the "i" in the "z, i" notation refers to the component of the Gaussian distribution at hand (e.g. $\mu_{z,i}$ is the vector defining the means for the ith Gaussian mixture component).

According to a first particular embodiment of said training method, the training set comprises agent trajectories, each agent trajectory comprising a set of previous positions of said agent. Moreover, the training method comprises a preliminary step of applying random transformations to at least part of the sets of previous positions respectively associated with the agents, said random transformations comprising a combination of rotations and/or a combination of translations.

A significant challenge in motion forecasting is properly training the designed network (i.e. here the system 10) since it has to be invariant to the position and rotation of the agents in the scene, produce diverse modalities, and combine the agents' trajectories with the road structure information and inter-agent interactions. To achieve the aforementioned invariance, said random transformations, such as a combination of rotations and translations, are advantageously applied to the training set.

According to a second particular embodiment of said training method, the training is implemented according to a "soft winner takes all" principle.

Considering such a "soft winner takes all" principle is based on the fact that predicting diverse modalities is a challenging task as, at each training step, all the forecasted modes are trained to produce the one correct trajectory, while the goal is that each one specializes to predict a different behaviour. This can be partially favoured by the Gaussian

mixing parameter $w_i$ as the loss L has a different weight depending on it.

For example, one can amplify this effect by applying a soft WTA approach that explicitly changes the weight $w_i$ of the loss L based on the mode accuracy. The modalities that achieve the best result on a scene can be strongly supervised to output the correct prediction while the others are less influenced. This can be achieved by multiplying the mixing component $w_i$ by a weight $a_i$ in the equation of the loss L. The weight $a_i$ can be computed based on the final displacement error $D_i$, which is the Euclidean distance between the last position predicted sampling the i-th mode, and the ground truth final position:

$$a_i = e^{m(1-\beta)(d-D_i)}$$

where m and d are determined weights, e.g. set to m = 20 and d = 2. Finally, $\beta$ regulates the strength of the difference and is annealed from 1 to 0 through the training epochs. When $\beta$ is approximately equivalent to 1, all the weights $a_i$ are equal, while as it approaches 0 they vary strongly depending on the accuracy.

According to a third particular embodiment, the training method comprises:

- a first training phase consisting in training the whole system 10 (i.e. the first encoder module MOD_ENC_1, the second encoder module MOD_ENC_2 and the decoder module MOD_DEC),
- a second training phase consisting in training only the first encoder module MOD_ENC_1 and the decoder module MOD_DEC,
- a third training phase consisting in training only the second encoder module MOD_ENC_2 and the decoder module MOD_DEC.

Moreover, according to said third particular embodiment, said first, second and third phases are performed simultaneously.

Said third particular embodiment enables to properly exploit the information provided by the social interaction influence and the road structure. As it should be noted, succeed in doing this is a hard problem as the two sources of information are partially overlapping and redundant. Therefore, according to said third particular embodiment, it is proposed to augment the training using two smaller side networks in addition to the complete one represented by the system 10, so as to formulate the prediction:

- a first sub-network that only exploit the social interaction influence information, and
- a second sub-network that only exploit the road structure information.

Both first and second sub-networks share the weights with the complete one, but the social-only network (i.e. said first sub-network) has the road structure branch removed whereas the road structure-only network (i.e. said second sub-network) has the social interaction influence removed. Given that M_L is not computed for the training of said social-only network, the first sub-module SUB_MOD_1 inside the decoder module MOD_DEC is skipped (i.e., for the first time step, h_{0,k,M_L} = h_{0,k}).

To train the second sub-network (so as to focus on the road structure), the first encoder module MOD_ENC_1 is removed and said road structure-only network only receives the last observed position for all traffic agents (i.e. only the last observed position of an agent A_k is given as input to two fully connected layers so as to obtain respectively c_{0,k} and h_{0,k}).

According to said third particular embodiment, the complete network system 10 benefits from that training strategy as the first and second encoder modules MOD_ENC_1, MOD_ENC_2 undergo two levels of training. Furthermore, by training the three networks simultaneously, the two sub-networks boost the use of the road structure and social information, and the complete network system 10 learns to fuse the information streams.

It is important to note that although the first, second and third particular embodiments have been described separately, they are nevertheless combinable with each other.

Experimental results of the system 10 and of the prediction method on a widely used motion prediction dataset, namely Argoverse (see reference [5]), are now presented. It is noted that the prediction method considered for these results is implemented by the system 10 after it has been trained in accordance with the first, second and third particular embodiments described above.

The Argoverse Motion Forecasting dataset includes more than 300,000 5 second scenes, consisting of several agents tracked throughout the scene. The position of each traffic agent is identified with the centre of mass of the objects without any distinction between car types, trucks, cyclists, and pedestrians. With 50 time steps in each trajectory, the position sampling rate is at 10 Hz. The Argoverse dataset includes High Definition (HD) maps featuring the road centerlines and a rasterized drivable area map. The dataset is divided into around 200,000 training samples, 40,000 validation samples, and 80,000 testing samples. In each sequence, the first 20 samples are observations and the following 30 need to be predicted. In each scene, a single agent is handpicked to be challenging and only its prediction is evaluated. This latter is chosen to be the anchor agent, and the scene coordinate system is located at the last observed step.

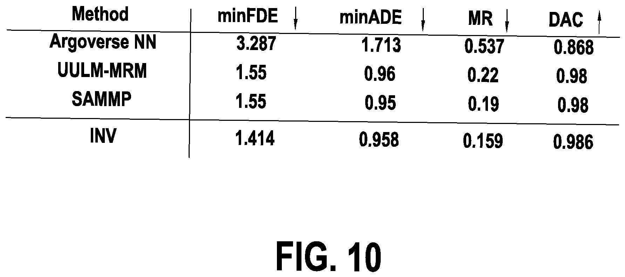

Figure 10 is a table showing performance results of the prediction method according to the invention.

As shown on Figure 10, performance of the prediction method (i.e. Multimodal predictions) is evaluated using four metrics:

- min Final Displacement Error (minFDE) i.e. the minimum L2 distance between the last predicted position of all the modes and the ground truth position,
- min Average Displacement Error (minADE) i.e. the average L2 distance between the ground truth trajectory and the predicted mode with the minimum FDE,
- Miss Rate (MR) i.e. the rate between the number of samples for which the minFDE is less than 2m and the total number of ground truth trajectories,
- Drivable Area Compliance (DAC) i.e. the rate between the number of trajectories that remain inside the road and the total number of trajectories.

The table of Figure 10 reports the performance of the prediction method according to the invention (referred to as "INV" in said table) on the Argoverse test set and in comparison with state-of-the-art methods. More precisely, the prediction method according to the invention outperforms by a wide margin the Nearest Neighbor (NN) technique proposed as an Argoverse baseline (see reference [5]). Moreover, the prediction method according to the invention is able to outperform the winners of the Argoverse Forecasting Challenge 2019 (SAMMP, see reference [6], and UULM-MRM, see reference [7]) on both minFDE and MR metrics. Furthermore, the prediction method according to the invention performs on par with the SAMMP and UULM-MRM methods on both minADE and DAC metrics.

References:

[1] "Who are you with and where are you going?", K. Yamaguchi, A. C. Berg, L. E. Ortiz, and T. L. Berg, in CVPR, 2011.

[2] "Rules of the road: Predicting driving behavior with a convolutional model of semantic interactions", Joey Hong, Benjamin Sapp, and James Philbin, in CVPR, 2019 (arXiv:1906.08945).

[3] "Attention is all you need", Ashish Vaswani, Noam Shazeer, Niki Parmar, Jakob Uszkoreit, Llion Jones, Aidan N Gomez, Ł ukasz Kaiser, and Illia Polosukhin, in NeurIPS, 2017 (arXiv:1706.03762).

[4] "Vectornet: Encoding hd maps and agent dynamics from vectorized representation", Jiyang Gao, Chen Sun, Hang Zhao, Yi Shen, Dragomir Anguelov, Congcong Li, and Cordelia Schmid, in CVPR, 2020 (arXiv:2005.04259).

[5] "Argoverse: 3d tracking and forecasting with rich maps", M. Chang, J. Lambert, P. Sangkloy, J. Singh, S. Bak, A. Hartnett, D. Wang, P. Carr, S. Lucey, D. Ramanan, and J. Hays, in CVPR, 2019.

[6] "Multi-head attention for multi-modal joint vehicle motion forecasting", J. Mercat, T. Gilles, N. El Zoghby, G. Sandou, D. Beauvois, and G. P. Gil, in ICRA, 2020.

[7] "Motion prediction of traffic actors for autonomous driving using deep convolutional networks", Djuric, N., Radosavljevic, V., Cui, H., Nguyen, T., Chou, F.C., Lin, T.H., Schneider, J, 2018 (arXiv: 1808.05819).

**Claims**

1. A computer-implemented recurrent neural network system (10) for predicting trajectories of agents present in a vicinity of a vehicle comprising traffic lanes, the system comprising:

- a first encoder module (MOD_ENC_1) configured to determine, for each agent and before a first time step, a vector ($h_{0,k}$) at least representative of a social interaction influence that the other agents have on said agent, said vector being determined by using previous trajectories (x_PAST) of the agents,
- a second encoder module (MOD_ENC_2) configured to determine a representation (M_L) of the traffic lanes,
- a decoder module (MOD_DEC) comprising :

    • a first sub-module (SUB_MOD_1) configured to determine, for each agent and for said first time step, a vector (h_{0,k,M_L}) representative of the lanes which have a preponderant influence for the prediction of the trajectory of said agent, said vector being determined by using the vector determined by the first encoder module for said agent and the traffic lanes representation determined by the second encoder module,
    • a second sub-module (SUB_MOD_2) corresponding to an artificial recurrent neural network configured to determine, for each agent and for said first time step, a vector (h_{1,k}) representative of a state of said agent using the vector determined by the first sub-module for said agent and at least a positional representation (x_{0,k}) of said agent at the beginning of the first time step,
    • a third sub-module (SUB_MOD_3) configured to determine, for each agent and for said first time step, a vector (s_{1,k}) at least representative of a social interaction influence that the other agents have on said agent using the vector determined by the second sub-module for said agent,
    • a fourth sub-module (SUB_MOD_4) configured to determine, for each agent and for said first time step, at least a positional representation (x_{1,k}) of said agent using the vector determined by the second sub-module for said agent.

2. The system (10) according to claim 1, wherein a plurality of consecutive time steps are considered, said system being further configured such that, for each agent and for each time step subsequent to a previous time step:

    - the output (h_{1,k}) of the second sub-module is provided as input to the first sub-module,
    - the output (x_{1,k}) of the fourth sub-module is provided as input to the second sub-module and the fourth sub-module,
    - the output (h_{1,k}) of the third sub-module is provided as input to the second sub-module.

3. The system according to any one of claims 1 to 2, wherein:

    - a positional representation of an agent is a Gaussian mixture representative of a position of said agent, the system further comprising a sampling module (MOD_SAMP) configured to determine, for each agent, a predicted trajectory (x_SAMP_{1,k}) by sampling said Gaussian mixture determined by the fourth sub-module for said agent, and/or
    - a vector (h_{0,k}, s_{1,k}) at least representative of a social interaction influence that the other agents have on said agent is determined by performing a multi head attention mechanism, and/or
    - said representation of the traffic lanes is determined as a matrix (M_L) by the second encoder module (MOD_ENC_2) by performing a multi-head attention mechanism and using polylines modelling said traffic lanes, and/or
    - said vector (h_{0,k,M_L}) representative of the lanes which have a preponderant influence for the prediction of the trajectory of said agent is determined by the first sub-module (SUB_MOD_1) by performing a single head attention mechanism, and/or
    - said positional representation (x_{1,k}) of said agent is determined by the fourth sub-module (SUB_MOD_4) by also using the positional representation used as input to the second sub-module and a velocity vector of said agent obtained from the vector determined by the second sub-module.

4. The system according to any one of claims 1 to 3, wherein the second sub-module is a cell of Long-Short Term Memory type configured to perform calculations according to the following formulae:

$$a\_\{t+1,k\} = \sigma(H\_1 \times h\_\{t-1,k,M\_L\} + S\_1 \times s\_\{t-1,k\} + k\_a)$$

$$b\_\{t+1,k\} = tanh(H\_2 \times h\_\{t,k,M\_L\} + S\_2 \times s\_\{t,k\} + k\_b)$$

$$d\_\{t+1,k\} = \sigma(H\_3 \times h\_\{t,k,M\_L\} + S\_3 \times s\_\{t,k\} + k\_d)$$

$$c_{\{t+1,k\}} = c_{\{t,k\}} * d_{\{t+1,k\}} + a_{\{t+1,k\}} * b_{\{t+1,k\}}$$

$$f_{\{t+1,k\}} = \sigma(H\_4 \times h_{\{t,k,M\_L\}} + X\_1 \times x_{\{t,k\}} + k\_f)$$

$$g_{\{t+1,k\}} = tanh(H\_5 \times h_{\{t,k,M\_L\}} + X\_2 \times x_{\{t,k\}} + k\_g)$$

$$h_{\{t+1,k\}} = tanh(c_{\{t+1,k\}}) * f_{\{t+1,k\}} + g_{\{t+1,k\}}$$

where:

- t is a time index representative of the current time step,
- k is an index representative of the agent,
- * is a symbol indicating elementwise multiplications,
- M_L is a representation of the traffic lanes determined by the second encoder module,
- h_{t-1,k,M_L} is the vector determined by the first sub-module,
- s_{t-1,k} is the social interaction influence vector provided as input to the second sub-module,
- σ is an activation function,
- x_{t-1,k} is the positional representation given as input to the second sub-module,
- H_1, H_2, H_3, H_4, H_5, S_1, S_2, S_3, X_1 and X_2 are constant matrices,
- k_a, k_b, k_d, k_f, k_g are constant vectors.

5. The system according to any one of claims 1 to 4, wherein:

    - a previous trajectory of an agent consists of a set of previous positions of the agent, or
    - a previous trajectory of an agent comprises a set of previous positions of said agent as well as a set of previous velocities of said agent and/or a set of previous accelerations of said agent.

6. The system according to any one of claims 1 to 5, wherein the vector (h_{1,k}) obtained at the output of the second sub-module is determined using a Gaussian mixture representative of a velocity of said agent at the beginning of the current time step.

7. A computer-implemented method for training a recurrent neural network system (10) according to any of claims 1 to 6.

8. The method according to claim 7, wherein the training set comprises agent trajectories, each agent trajectory comprising a set of previous positions of said agent, said method comprising a preliminary step of applying random transformations to at least part of the sets of previous positions respectively associated with the agents, said random transformations comprising a combination of rotations and/or a combination of translations.

9. The method according to any one of claims 7 to 8, the training being implemented according to the "soft winner takes all" principle.

10. The method according to any one of claims 7 to 9, the method comprising:

    - a first training phase consisting in training the whole system,
    - a second training phase consisting in training only the first encoder module and the decoder module,
    - a third training phase consisting in training only the second encoder module and the decoder module,

    said first, second and third phases being performed simultaneously.

11. A computer-implemented method for predicting trajectories of agents present in a vicinity of a vehicle comprising traffic lanes, said method being carried out by a recurrent neural network system (10) trained by a method according to any of claims 7 to 10.

12. A computer program including instructions for executing a training method according to any one of claims 7 to 10 or a prediction method according to claim 11 when said program is executed by a computer.

13. A recording medium readable by a computer and having recorded thereon a computer program according to claim 12.

14. A vehicle equipped with a system (10) trained by a method according to any of claims 7 to 10.

**FIG. 1**

**FIG. 2**

MOD_ENC_1

X_PAST → Temporal Convolution → LSTM → c_{0,k}

LSTM → h_LSTM_{0,k} → Agent-to-Agent Attention → h_{0,k}

## FIG. 3

MOD_ENC_2

Polylines → CNN ⋮ CNN → Lane-to-Lane Attention → M_L

## FIG. 4

MOD_DEC

c_{0,k}

h_{0,k} → SUB_MOD_1 (Agent-to-Lane Attention) → h_{0,k,M_L} → SUB_MOD_2 → c_{1,k}

SUB_MOD_2 → h_{1,k}

SUB_MOD_3 (Agent-to-Agent Attention) → FC_LAYER → s_{1,k}

s_{0,k}

x_{0,k} → SUB_MOD_4 → x_{1,k}

M_L

## FIG. 5

20

SUB_MOD_2

c_{0,k} ⊗ ⊕ c_{1,k}

tanh

⊗

σ σ tanh ⊗ ⊕ h_{1,k}

σ tanh

h_{0,k,M_L}

s_{0,k}                    x_{0,k}

# FIG. 6

SUB_MOD_4

h_{1,k} → | NET | v_{1,k} → | Integrator | → x_{1,k}

x_{0,k}

# FIG. 7

**FIG. 8**

Determining, for each agent A_k and for said first time step, the vector h_{0,k}    E100

Determining the matrix M_L    E200

Determining, for each agent A_k and for said first time step, the vector h_{0,k,M_L}    E310

Determining, for each agent A_k and for said first time step, the vector h_{1,k}    E320

Determining, for each agent A_k and for said first time step, the vector s_{1,k}    E330

Determining, for each agent A_k and for said first time step, the Gaussian mixture x_{1,k}    E340

E300

Determining, for each agent A_k, the predicted trajectory x_SAMP_{1,k}    E400

# FIG. 9

| Method | minFDE ↓ | minADE ↓ | MR ↓ | DAC ↑ |
|---|---|---|---|---|
| Argoverse NN | 3.287 | 1.713 | 0.537 | 0.868 |
| UULM-MRM | 1.55 | 0.96 | 0.22 | 0.98 |
| SAMMP | 1.55 | 0.95 | 0.19 | 0.98 |
| INV | 1.414 | 0.958 | 0.159 | 0.986 |

# FIG. 10

# EUROPEAN SEARCH REPORT

**Application Number**

EP 21 18 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MERCAT JEAN ET AL: "Multi-Head Attention for Multi-Modal Joint Vehicle Motion Forecasting", 2020 IEEE INTERNATIONAL CONFERENCE ON ROBOTICS AND AUTOMATION (ICRA), IEEE, 31 May 2020 (2020-05-31), pages 9638-9644, XP033826670, DOI: 10.1109/ICRA40945.2020.9197340 [retrieved on 2020-09-14] * abstract * * page 9638, left-hand column, line 1 - page 9643, right-hand column, last line * | 1-14 | INV. G06N3/04 G06N3/08 G06N7/00 |
| A | WENYUAN ZENG ET AL: "LaneRCNN: Distributed Representations for Graph-Centric Motion Forecasting", ARXIV.ORG, CORNELL UNIVERSITY LIBRARY, 201 OLIN LIBRARY CORNELL UNIVERSITY ITHACA, NY 14853, 17 January 2021 (2021-01-17), XP081861339, * abstract * * page 1, left-hand column, line 1 - page 8, right-hand column, last line * | 1-14 | |
| A | OSAMA MAKANSI ET AL: "Overcoming Limitations of Mixture Density Networks: A Sampling and Fitting Framework for Multimodal Future Prediction", ARXIV.ORG, CORNELL UNIVERSITY LIBRARY, 201 OLIN LIBRARY CORNELL UNIVERSITY ITHACA, NY 14853, 8 June 2020 (2020-06-08), XP081679260, DOI: 10.1109/CVPR.2019.00731 * abstract * * page 1, left-hand column, line 1 - page 8, right-hand column, last line * | 1-14 | TECHNICAL FIELDS SEARCHED (IPC) G06N |

-/--

The present search report has been drawn up for all claims

| Place of search | Date of completion of the search | Examiner |
|---|---|---|
| The Hague | 21 January 2022 | Totir, Felix |

**page 1 of 2**

Europäisches
Patentamt

European
Patent Office

Office européen
des brevets

# EUROPEAN SEARCH REPORT

**Application Number**

EP 21 18 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MELLO RELLA EDOARDO ET AL: "Decoder Fusion RNN: Context and Interaction Aware Decoders for Trajectory Prediction", , [Online] 12 August 2021 (2021-08-12), pages 1-7, XP055882095, DOI: 10.3929/ethz-b-000521006 Retrieved from the Internet: URL:https://arxiv.org/pdf/2108.05814.pdf> [retrieved on 2022-01-21] * abstract * * page 1, left-hand column, line 1 - page 7, left-hand column, last line * ----- | 1-14 | |

TECHNICAL FIELDS
SEARCHED (IPC)

The present search report has been drawn up for all claims

| Place of search | Date of completion of the search | Examiner |
|---|---|---|
| The Hague | 21 January 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. YAMAGUCHI ; A. C. BERG ; L. E. ORTIZ ; T. L. BERG.** Who are you with and where are you going?. *CVPR,* 2011
- **JOEY HONG ; BENJAMIN SAPP ; JAMES PHILBIN.** Rules of the road: Predicting driving behavior with a convolutional model of semantic interactions. *CVPR,* 2019
- **JIYANG GAO ; CHEN SUN ; HANG ZHAO ; YI SHEN ; DRAGOMIR ANGUELOV ; CONGCONG LI ; CORDELIA SCHMID.** Vectornet: Encoding hd maps and agent dynamics from vectorized representation. *CVPR,* 2020
- **M. CHANG ; J. LAMBERT ; P. SANGKLOY ; J. SINGH ; S. BAK ; A. HARTNETT ; D. WANG ; P. CARR ; S. LUCEY ; D. RAMANAN.** Argoverse: 3d tracking and forecasting with rich maps. *CVPR,* 2019
- **J. MERCAT ; T. GILLES ; N. EL ZOGHBY ; G. SANDOU ; D. BEAUVOIS ; G. P. GIL.** Multi-head attention for multi-modal joint vehicle motion forecasting. *ICRA,* 2020
- **DJURIC, N. ; RADOSAVLJEVIC, V. ; CUI, H. ; NGUYEN, T. ; CHOU, F.C. ; LIN, T.H. ; SCHNEIDER, J.** Motion prediction of traffic actors for autonomous driving using deep convolutional networks. *arXiv: 1808.05819,* 2018